(19) **Europäisches Patentamt**
**European Patent Office**
**Office européen des brevets**

(11) **EP 1 908 007 B1**

(12) **EUROPEAN PATENT SPECIFICATION**

(45) Date of publication and mention of the grant of the patent:
**22.08.2012 Bulletin 2012/34**

(51) Int Cl.:
***G06T 1/00*** (2006.01)

(21) Application number: **06752666.5**

(22) Date of filing: **04.07.2006**

(86) International application number:
**PCT/AU2006/000941**

(87) International publication number:
**WO 2007/003008 (11.01.2007 Gazette 2007/02)**

(54) **IMAGE WATERMARKING**

BILD-WASSERZEICHEN

ETABLISSEMENT DE FILIGRANE D'IMAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.07.2005 AU 2005903534**

(43) Date of publication of application:
**09.04.2008 Bulletin 2008/15**

(73) Proprietor: **Commonwealth Scientific and Industrial Research Organisation**
**Campbell, ACT 2612 (AU)**

(72) Inventors:
• **PLANITZ, Birgit, Maria**
**Tallai, QLD 4213 (AU)**
• **MAEDER, Anthony, John**
**Greenbank, QLD 4124 (AU)**

(74) Representative: **Latham, Stuart Alexander et al**
**Withers & Rogers LLP**
**4 More London Riverside**
**London SE1 2AU (GB)**

(56) References cited:
**EP-A2- 1 079 633**       **GB-A- 2 383 220**
**US-A1- 2002 066 019**   **US-B1- 6 278 792**

• **HARTUNG F ET AL: "Digital watermarking of MPEG-2 coded video in the bitstream domain" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 4, 21 April 1997 (1997-04-21), pages 2621-2624, XP010225693 ISBN: 978-0-8186-7919-3**
• **CHEN D-Y ET AL: "A SHIFT-RESISTING PUBLIC WATERMARK SYSTEM FOR PROTECTING IMAGE PROCESSING SOFTWARE" IEEE TRANSACTIONS ON CONSUMER ELECTRONICS, IEEE SERVICE CENTER, NEW YORK, NY, US, vol. 46, no. 3, 1 August 2000 (2000-08-01), pages 404-414, XP001142861 ISSN: 0098-3063**
• **MAURO BARNI ET AL: "Capacity of Full Frame DCT Image Watermarks" IEEE TRANSACTIONS ON IMAGE PROCESSING, IEEE SERVICE CENTER, PISCATAWAY, NJ, US, vol. 9, no. 8, 1 August 2000 (2000-08-01), XP011025629 ISSN: 1057-7149**

**Description**

**Field of the Invention**

The present invention relates generally to image watermarking and, in particular, to adaptively watermarking an image by embedding a payload into the image.

**Background**

The storing and distribution of media, such as images, is increasingly performed in a digital format. Unfortunately, the digital format also makes the copying of such media very simple whereby exact copies may be made, or alternatively for media to be altered without leaving obvious signs that the media has been altered. A need exists, therefore, for mechanisms to protect ownership of digital media, or to detect whether the media has been altered.

Digital watermarking is a technique that provides a solution to this need. Digital watermarks are pieces of information embedded to digital data, such as a digital image, that can be detected or extracted later to make an assertion about the data. The information can take many forms. The embedded information may be textual data about the author, its copyright, etc; or it may even be another image.

Digital watermarks are generally embedded into digital images in a manner that make the watermark invisible to a human observer as such watermarks do not cause degradation in the aesthetic quality, or in the usefulness of the images. The digital watermarks can be detected and extracted later to facilitate a claim of ownership, to extract relevant information, or to determine whether the image has been altered.

Watermarks may also be classified as 'robust' or 'fragile'. Robust watermarks are those which are difficult to remove from the image in which they are embedded, and are therefore useful to assert ownership. Fragile watermarks are those that are easily destroyed by any attempt to tamper with the image. Fragile watermarks may therefore be used to determine whether an image has been altered, because if a watermark in a previously watermarked image is absent then it may be concluded that the image has been altered.

In recent years, medical images are also archived and communicated in digital form. For example, healthcare facilities and physicians use a picture archiving and communications system (PACS) to manage and archive patient images. Such images may also be distributed via the Internet. Another example of the increased mobility of medical images is the use of tele-radiology. Due to the sensitive nature of medical images, it is important that the authenticity of the images can be verified.

For reasons explained above, watermarking offers a solution to verify the authenticity of the medical images. However, it is particularly important with medical images that the perceptual integrity and quality of the images be maintained during the watermarking because the clinical reading of the images (e.g. for diagnosis) must not be affected. As a result the information carrying capacity of medical images is relatively low.

US2002/0066019 describes a method of inserting a message in a subset (VO) of digital data representing physical quantities, including the steps of: estimating (E4) a capacity to receive a message for said subset, selecting (E5) a message with a size less than or equal to the estimated capacity, in a set of a messages, and inserting (E6) the selected message in the said subset of digital data.

Digital Watermarking of MPEG-2 Coded Video in the Bitstream Domain, Frank Hartung and Bernd Girod, describes a scheme for robust watermarking of MPEG-2 encoded video. The watermark is embedded into the MPEG-2 bitstream without increasing the bit-rate, and can be retrieved even from the decoded video and without knowledge of the original, unwatermarked video. Although an existing MPEG-2 bitstream is partly altered, the scheme avoids visible artifacts by adding a drift compensation signal. The scheme is also applicable to other hybrid coding schemes like MPEG-1, H.261, and H.263.

A Shift-Resisting Public Watermark System for Protecting Image Processing Software, Ding-Yun Chen, Ming Ouhyoung and Ja-Ling Wu, describes a public watermarking system to protect image processing software and images. A binary image is embedded as watermark in DCT domain, and the watermarked image is imperceptible by human visual system and robust to image shifting or cropping. A feature-based approach is used to synchronize the watermark positions during embedding and extracting.

EP1041805A2 describes a watermark-data-hiding apparatus, where an error detection code adding circuit adds error detection codes to watermark data. An encrypting circuit encrypts the error detection code added watermark data according to a first password. N encoders hide the encrypted error detection code added watermark data in the content data by N different hiding algorithms, respectively. A selector selects one of N encoders in response to a selection signal and outputs the encoded and selected content data in which the encrypted error detection code added watermark data is hidden.

A need exists for a watermarking method which limits the visual degradation of images.

## Summary

A watermarking method is proposed for encoding a payload into an image in a manner which limits the visual degradation of the image.
According to a first aspect of the present invention, there is provided a method according to claim 1
According to a second aspect of the present invention, there is provided a method according to claim 9.
According to another aspect of the present invention, there is provided an apparatus for implementing any one of the aforementioned methods.
According to yet another aspect of the present invention there is provided a computer program product including a computer readable medium having recorded thereon a computer program for implementing any one of the methods described above.
Other aspects of the invention are also disclosed.

## Brief Description of the Drawings

One or more embodiments of the present invention will now be described with reference to the drawings in which:

Fig. 1 shows a schematic flow diagram of a method of watermarking an image to form a watermarked image;
Fig. 2 shows a schematic flow diagram of a method of decoding the watermarked image;
Fig. 3 is a schematic block diagram of a general purpose computer upon which arrangements described can be practiced; and
Figs 4A and 4B show an 8x8 block in the discrete cosine transform (DCT) domain used to explain the preferred DCT watermarking method.

## Detailed Description

Where reference is made in any one or more of the accompanying drawings to steps and/or features, which have the same reference numerals, those steps and/or features have for the purposes of this description the same function(s) or operation(s), unless the contrary intention appears.

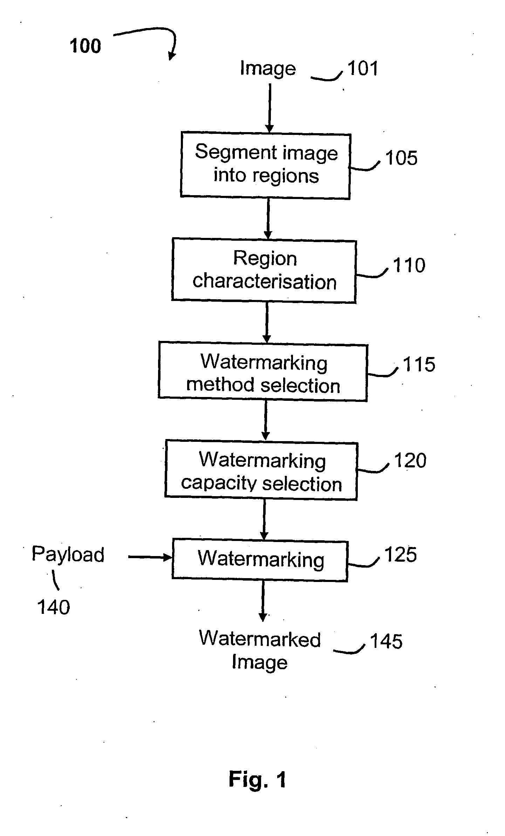

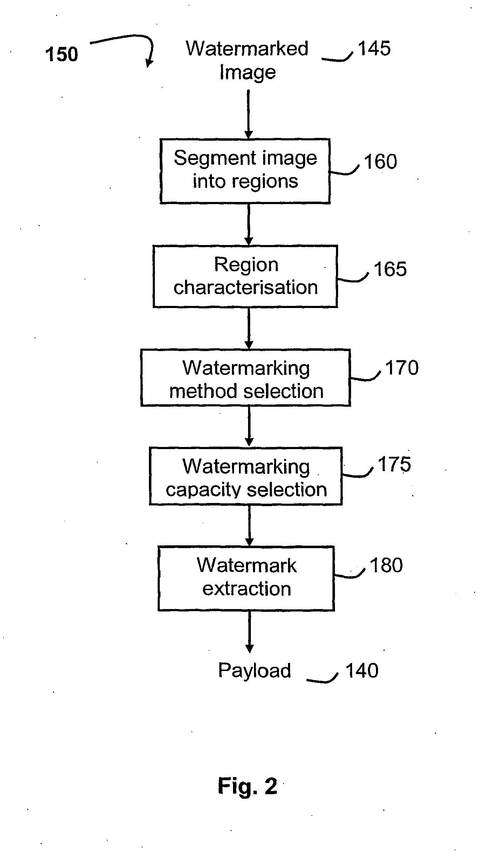

Fig. 1 shows a schematic flow diagram of a method 100 of watermarking an image 101 to form a watermarked image 145 by embedding a payload 140 within the image 101. Fig. 2 shows a schematic flow diagram of a method 150 of decoding the watermarked image 145 to extract the embedded payload 140 from the watermarked image 145.
It is desirable that the perceptual error introduced through the watermarking of the image 101 be minimised. Limits on human visual detection of image degradation provide thresholds for tolerable image quality losses, which in turn provide an envelope for the amount of information which can safely be devoted to watermarking. One measure of perceptual error is a structural comparison providing a perceptual error metric. The structural comparison determines the amount of similarity between an original (unwatermarked) region and that region after watermarking, and is calculated as follows:

$$SC = \frac{\sigma_{xy}}{\sigma_x \sigma_y} \tag{1}$$

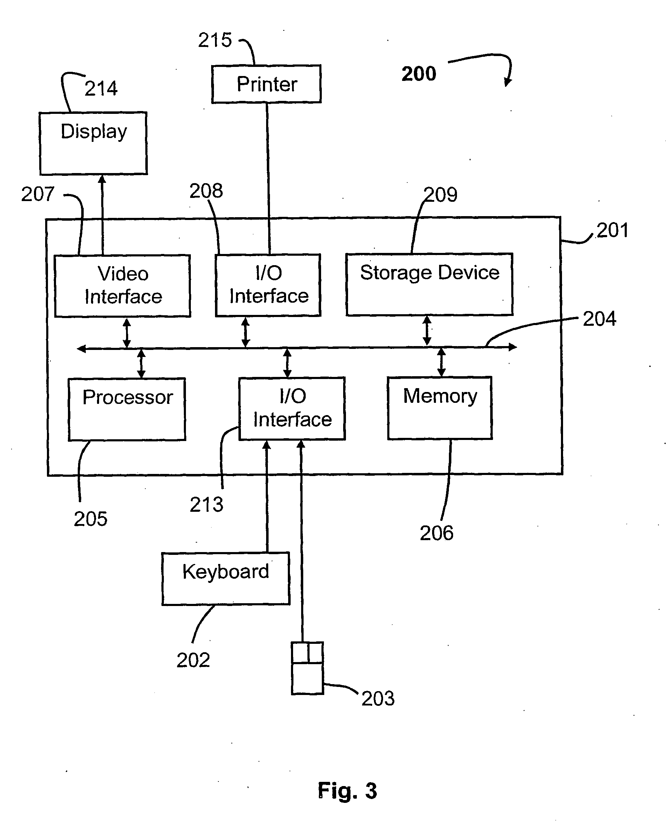

wherein $\sigma_x$, is the standard deviations of the original (unwatermarked) region, $\sigma_y$ is the standard deviation of the watermarked region, and $\sigma_{xy}$ is the correlation coefficient between the original and watermarked regions. Other measures may be used to estimate perceptual error.
The methods 100 and 150 of watermarking the image 101 and decoding the watermarked image 145 are preferably practiced using a general-purpose computer system 200, such as that shown in Fig. 3 wherein the processes of Figs. 1 and 2 may be implemented as software, such as an application program executing within the computer system 200. In particular, the steps of methods 100 and 150 are effected by instructions in the software that are carried out by the computer system 200. The software may be stored in a computer readable medium. The software is loaded into the computer system 200 from the computer readable medium, and then executed by the computer system 200. A computer readable medium having such software or computer program recorded on it is a computer program product. The use of the computer program product in the computer preferably effects an advantageous apparatus for watermarking an image and decoding a watermarked image.
The computer system 200 is formed by a computer module 201, input devices such as a keyboard 202 and mouse 203, output devices including a printer 215, and a display device 214. The computer module 201 typically includes at least one processor unit 205, a memory unit 206, and an number of input/output (I/O) interfaces including a video interface 207 that couples to the video display 214, an I/O interface 213 for the keyboard 202 and mouse 203, and an interface 208 for the printer 215. A storage device 209 is provided and typically includes one or more of a hard disk drive, a floppy disk drive and a CD-ROM drive. The components 205 to 213 of the computer module 201 typically communicate via an interconnected bus 204 and in a manner which results in a conventional mode of operation of the computer system 200 known to those in the relevant art.

The methods 100 and 150 may alternatively be implemented in dedicated hardware such as one or more integrated circuits performing the functions or sub functions of watermarking an image and decoding a watermarked image. Such dedicated hardware may include graphic processors, digital signal processors, or one or more microprocessors and associated memories.

Referring to Fig. 1, the method 100 starts in step 105 where the processor 205 retrieves the image 101 from the storage device 209 and segments the image 101 into regions. In the preferred implementation the regions are 8x8 pixel blocks. However, other block sizes and block shapes may be used.

Also, the size of the regions may be made variable. In one implementation adjoining areas within the image that have similar statistical features (described below) are grouped to form regions of varying sizes. In a other implementation the areas within the image are classified according to content, such as texture or edges, and adjoining areas are grouped to form regions of varying sizes.

In step 110 the processor 205 then characterizes each region using one or more statistical features of respective regions. Such statistical features may include the standard deviation $\sigma_R$ of the values of the pixels within the region.

Based on the characterization of each region, a watermarking method is selected by the processor 205 for each respective region in step 115. In a preferred implementation a selection is made between a spatial domain watermarking method and a frequency domain watermarking method. More particularly, the selection is made between the Least Significant Bit (LSB) and the Discrete Cosine Transform (DCT) watermarking methods known in the art. The LSB based watermarking method sets selected least significant bit(s) of pixels in a region to the binary values 0 or 1 based on a section of the payload 140. DCT based watermarking method sets selected least significant bit(s) of DCT coefficients of a region to the binary values 0 or 1 based on a section of the payload 140. By setting the least significant bit(s) of either pixels or coefficients the least amount of perceptual error is added to the region, and ultimately the image.

In the case where the standard deviation $\sigma_R$ is used to characterize each region, then if the standard deviation $\sigma_R$ below a predetermined threshold $\varphi$ the LSB watermarking method is used. This is because the LSB watermarking method has been found through experimentation on 12-bit Magnetic Resonance (MR) images to produce less structural errors in the watermarked image 145 than the DCT watermarking method for lower standard deviation $\sigma_R$ with the structural errors being based upon the structural comparison SC presented in Equation (1). Thus, the LSB watermarking method introduces higher perceptual similarity for lower standard deviations $\sigma_R$ than the DCT watermarking method. In the preferred implementation the predetermined threshold $\phi$ is set to $2^5$ for a certain type of MR images.

In the case where the standard deviation $\sigma_R$ is above the predetermined threshold $\phi$, then the DCT watermarking method is used. It has been found in the before mentioned experimentation that for higher standard deviations $\sigma_R$ the LSB and DCT watermarking methods produce similar structural errors in the watermarked image 145. The DCT watermarking method is selected for higher standard deviations $\sigma_R$ over the LSB watermarking method because the DCT watermarking method is more robust than the LSB watermarking method.

Next, in step 120, the processor 205 selects for each region a capacity level based on the characteristics of respective regions. The capacity level of any one region establishes the number of bits that may be embedded into that region without compromising the region's perceptual quality.

For certain examples of MR images the processor 205 preferably selects from 3 different capacity levels, which are 0, 1, and 2. That is, the processor 205 selects whether 0, 1 or 2 bits are to be embedded into the region. In the case where the regions are characterized using the standard deviation $\sigma_R$ of each region, capacity level 0 is selected when the standard deviation $\sigma_R$ is less than a first bound $\varepsilon_1$ because any changes made to pixel values at low standard deviations $\sigma_R$ cause large structural errors. For standard deviations $\sigma_R$ in a mid range, that is for standard deviations $\sigma_R$ between the first bound $\varepsilon_1$ and a second bound $\varepsilon_2$, the capacity level 1 is selected because low levels of embedding is acceptable at such standard deviations $\sigma_R$. Finally, in the case where the standard deviations $\sigma_R$ exceeds the second bound $\varepsilon_2$ structural errors are negligible, and the capacity level 2 is selected for such regions. For specific examples of MR images the first bound $\varepsilon_1$ may be set to $2^3$ and the second bound $\varepsilon_2$ may be set to $2^5$. The number of different capacity levels and associated bounds are predetermined for particular image types.

The method 100 then proceeds to step 125 where each region is embedded with a section of the payload using the watermarking method selected for that region in step 115 and the capacity level selected in step 120, thereby forming watermarked image 145.

Consider the case where an $8 \times 8$ block size is used for regions. Only 0, 1 or 2 bits are embedded in each region. Hence, in the case of the LSB watermarking method, only the least significant bit of 1 or 2 of the 64 pixels is changed. The preferred implementation uses the least significant bit of the first 1 or 2 pixels in the block to embed a section of the payload 140.

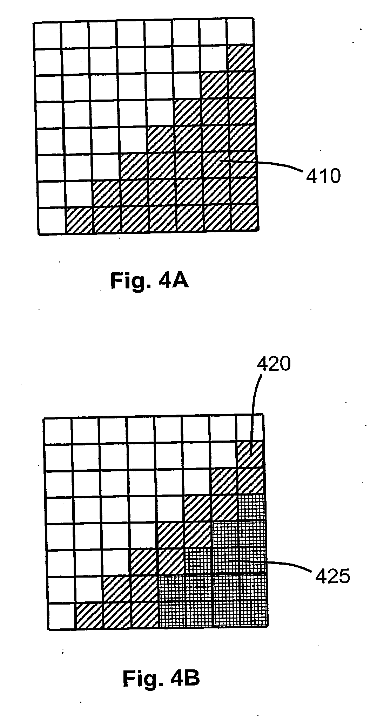

In the case of the DCT watermarking method, the high frequency coefficients are used to embed a section of the payload 140 as those coefficients introduce the least perceptual distortion to the image 101. Figs 4A and 4B show an $8\times8$ block in the DCT domain. The shaded block group 410 in Fig. 4A are the blocks used to embed 1 or 2 bits of the payload 140 in the block. In the case where 1 bit is embedded, all the block in group 410 are used, whereas when 2 bits are embedded the blocks in groups 420 and 425 shown in Fig. 4B are used to embed the 2 bits respectively.

A bit is embedded in a group 410, 420 or 425 by applying the exclusive OR (XOR) function to all the LSBs of the rounded DCT coefficients of the blocks (which are typically quantised) in the group 410, 420 or 425. If the result of applying the XOR function is the same as the value of the bit to be embedded, the DCT coefficients of the group 410, 420 or 425 remains unchanged. If the result of applying the XOR function is different to the value of the bit to be embedded, the value '1' is added to the rounded DCT coefficients of the blocks of the group 410, 420 or 425, such that the smallest possible perceptual error occurs. This process is repeated until the result of applying the XOR function to the LSBs of the rounded DCT coefficients of the blocks in the group 410, 420 or 425 is the same as the the value of the bit to be embedded.

Let $b_p$ be the number of bits in the payload 140 and $b_m$ be the sum of the capacity levels of all the regions. If $b_p<b_m$, that is the payload 140 is less than the total payload capacity calculated for the image, then the payload 140 is embedded in the first number of regions until all the sections of the payload 140 are embedded. Preferably the payload 140 is relatively small. As a result $b_p<b_m$ would typically apply for most images.

If $b_p=b_m$, that is the payload 140 exactly matches the total payload capacity calculated for the image, then the payload 140 is embedded in each region. If $b_p>b_m$ then the payload 140 exceeds the total payload capacity calculated for the image. In this case the first $b_m$ bits of the payload 140 is embedded.

Reference is now made to Fig. 2 wherein the schematic flow diagram of the method 150 of decoding the watermarked image 145 to extract the embedded payload 140 is shown. The method 150 starts in step 160 where the processor 205 retrieves the watermarked image 145 from the storage device 209 and segments the watermarked image 145 into regions in a manner corresponding to the manner in which the image 101 was segmented in step 105 (Fig. 1).

The processor 205 then in step 165 characterizes each region in a manner corresponding to the manner in which the regions were characterized in step 110 (Fig. 1). Based on the characterization of each region, a watermarking method is selected by the processor 205 for each respective region in step 170 using the same criteria for selection as was used in step 115. The character of the regions would remain unchanged following the embedding of a section of the payload 140 in each region because the very little change is introduced in each region. Accordingly, as the same criteria are used in step 115 (Fig. 1) and step 170, the watermarking method selected would be the same.

Step 175 follows where the processor 205 selects for each region a capacity level based on the characteristics of respective regions, again in a manner corresponding to the manner in which the capacity level was selected in step 120 (Fig. 1).

Finally, the method 150 ends in step 180 where a section of the payload is extracted from each region based upon the watermarking method selected for that region in step 170 and the capacity level selected in step 175. Sequentially appending the respective sections of the payload, the payload 140 is formed.

In one implementation an end-of-payload special marker, which forms part of the payload 140 embedded in the image 101 during method 100, signifies the end of the payload 140. In another implementation the payload 140 has a predefined bit-length $b_p$. In yet a further implementation the method 150 processes all the regions as set out above. As sections of the (real) payload 140 are typically only embedded in a first number of regions, the sections of the payload extracted from the remainder of the regions would include noise. A user may then make a determination where the real payload 140 ends.

It is noted that the method 150 of decoding does not require side information, such as the number of bits $b_p$ in the payload 140. This is particularly useful for medical images due to the fact that it is desirable to only embed a relatively small payload into medical images. Large payloads have a particularly detrimental affect of medical images for reasons explained in the "background" section.

Methods 100 and 150 are also particularly useful as the original (unwatermarked) image 101 is not required to be available when decoding the watermark image. The payload can be extracted from the watermarked image 145 only.

The foregoing describes only some embodiments of the present invention, and modifications and/or changes can be made thereto without departing from the scope of the claims the embodiments being illustrative and not restrictive.

## Claims

1. A method of watermarking an image, said method comprising the steps of:

    segmenting said image into regions (105);

characterizing each region based upon one or more statistical features of respective regions (110);
for each of said regions, selecting one of a predetermined number of watermarking methods based on the characterization of the respective region (115);
for each of said regions, selecting a number of bits to be embedded into the respective region based on the characterization of the region (120); and
for each of said regions, embedding said number of bits of data into the respective region using the watermarking method selected for the region (125).

2. A method according to claim 1, wherein at least one of size and shape of said regions is variable dependent upon one or more properties of pixels in respective regions.

3. A method according to claim 1 or 2, wherein said one or more statistical features include the standard deviation $\sigma_R$ of the values of pixels within respective regions.

4. A method according to claim 3, wherein said number of bits is selected dependent upon predefined ranges of said standard deviation $\sigma_R$.

5. A method according to claim 1, wherein a selection is made between a spatial domain watermarking method and a frequency domain watermarking method.

6. A method according to claim 5, wherein said spatial domain watermarking method is the Least Significant Bit (LSB) watermarking method.

7. A method according to claim 5, wherein said frequency domain watermarking method is the Discrete Cosine Transform (DCT) watermarking method.

8. A method according to claim 5, wherein said one or more statistical features include the standard deviation $\sigma_R$ of the values of pixels within respective regions and wherein said spatial domain watermarking method is selected when said standard deviation $\sigma_R$ is below a predefined threshold, and said frequency domain watermarking method is selected otherwise.

9. A method of decoding a watermarked image, said method comprising the steps of:

segmenting said watermarked image into regions (180);
characterizing each region based upon one or more statistical features of respective regions (165);
for each of said regions, selecting one of a predetermined number of watermarking methods based on the characterization of the respective region (170);
for each of said regions, selecting a number of bits to be extracted from the respective region based on the characterization of the region(175); and
for each of said regions, extracting said number of bits of data from the respective region using the watermarking method selected for the region (180).

10. A method according to claim 9, wherein at least one of size and shape of said regions is variable dependent upon one or more properties of pixels in respective regions.

11. A method according to claim 9 or 10, wherein said one or more statistical features include the standard deviation $\sigma_R$ of the values ofpixels within respective regions.

12. A method according to claim 11, wherein said number of bits is selected dependent upon predefined ranges of said standard deviation $\sigma_R$.

13. A method according to claim 9, wherein a selection is made between a spatial domain watermarking method and a frequency domain watermarking method.

14. A method according to claim 13, wherein said spatial domain watermarking method is the Least Significant Bit (LSB) watermarking method.

15. A method according to claim 13, wherein said frequency domain watermarking method is the Discrete Cosine Transform (DCT) watermarking method.

16. A method according to claim 13, wherein said one or more statistical features include the standard deviation $\sigma_R$ of the values of pixels within respective regions and wherein said spatial domain watermarking method is selected when said standard deviation $\sigma_R$ is less than a predefined threshold, and said frequency domain watermarking method is selected otherwise.

17. Apparatus for watermarking an image, said apparatus comprising:

means for segmenting said image into regions;
means for characterizing each region based upon one or more statistical features of respective regions;
means for selecting, for each of said regions, one of a predetermined number of watermarking methods based on the characterization of the respective region;
means for selecting, for each of said regions, a number of bits to be embedded into the respective region based on the characterization of the region; and
means for embedding, for each of said regions, said number of bits of data into the respective region using the watermarking method selected for the region.

18. Apparatus for decoding a watermarked image, said apparatus comprising:

means for segmenting said watermarked image into regions;
means for characterizing each region based upon one or more statistical features of respective regions;
means for selecting, for each of said regions, one of a predetermined number of watermarking methods based on the characterization of the respective region;
means for selecting, for each of said regions, a number of bits to be extracted from the respective region based on the characterization of the region; and
means for extracting, for each of said regions, said number of bits of data from the respective region using the watermarking method selected for the region.

19. A computer program product including a computer readable medium having recorded thereon a computer program for implementing the method of any one of claims 1 to 16.

**Patentansprüche**

1. Verfahren zur Bild-Wasserzeichenmarkierung, wobei das Verfahren die Schritte aufweist:

- Segmentieren des Bildes in Regionen (105);
- Charakterisieren von jeder Region auf der Basis von einem oder mehreren statistischen Merkmalen von jeweiligen Regionen (110);
- für jede der Regionen, Auswählen von einer vorgegebenen Anzahl von Wasserzeichenmarkierungsverfahren auf der Basis der Charakterisierung der jeweiligen Regionen (115);
- für jede der Regionen, Auswählen einer Anzahl von Bits, die in die jeweilige Region auf der Basis der Charakterisierung der Region (120) eingebettet werden sollen, und
- für jede der Regionen, Einbetten der Anzahl von Bits von Daten in die jeweilige Region unter Verwendung des Wasserzeichenmarkierungsverfahrens, das für die Region (125) ausgewählt wurde.

2. Verfahren nach Anspruch 1, worin wenigstens die Größe oder die Form der Regionen je nach einer oder mehreren Eigenschaften der Pixel in den jeweiligen Regionen variabel ist.

3. Verfahren nach Anspruch 1 oder 2, worin die einen oder mehreren statistischen Merkmale die Standardabweichung $\sigma_R$ der Werte der Pixel in den jeweiligen Regionen umfasst.

4. Verfahren nach Anspruch 1, worin die Anzahl der Bits abhängig von vorgegebenen Bereichen der Standartabweichung $\sigma_R$ ausgewählt wird.

5. Verfahren nach Anspruch 1, worin die Auswahl zwischen dem Wasserzeichenmarkierungsverfahren der Raumdomäne und einem Wasserzeichenmarkierungsverfahren der Frequenzdomäne gemacht wird.

**6.** Verfahren nach Anspruch 5, worin das Wasserzeichenmarkierungsverfahren der Raumdomäne das Wasserzeichenmarkierungsverfahren der am geringsten signifikanten Bits (Least Significant Bit, LSB) ist.

**7.** Verfahren nach Anspruch 5, worin das Wasserzeichenmarkierungsverfahren der Frequenzdomäne das Wasserzeichenmarkierungsverfahren der diskreten Kosinus-Transformation (Discrete Cosine Transform, DCT) ist.

**8.** Verfahren nach Anspruch 5, worin die einen oder mehreren statistischen Merkmale die Standardabweichung $\sigma_R$ der Werte der Pixel in den jeweiligen Regionen umfasst, und worin das Wasserzeichenmarkierungsverfahren der Raumdomäne ausgewählt wird, wenn die Standardabweichung $\sigma_R$ unterhalb eines vorgegebenen Standardwertes ist, und worin das Wasserzeichenmarkierungsverfahren der Frequenzdomäne ansonsten ausgewählt wird.

**9.** Verfahren zum Dekodieren eines Wasserzeichenmarkierten Bildes, wobei das Verfahren die Schritte aufweist:

- Segmentieren des Wasserzeichenmarkierten Bildes in Regionen (180);
- Charakterisieren von jeder Region basierend auf einem oder mehreren statistischen Merkmalen der jeweiligen Regionen (165);
- für jede der Regionen, Auswählen von einer vorgegebenen Anzahl von Wasserzeichenmarkierungsverfahren basierend auf der Charakterisierung der jeweiligen Region (170);
- für jede der Regionen, Auswählen einer Anzahl von Bits, die von der jeweiligen Region auf der Basis der Charakterisierung der Region (175) zu extrahieren sind, und
- für jede der Regionen, Extrahieren der Anzahl der Bits von Daten aus der jeweiligen Region unter Verwendung des Wasserzeichenmarkierungsverfahrens, das für die Region (180) ausgewählt wurde.

**10.** Verfahren nach Anspruch 9, worin wenigstens die Größe oder die Form der Regionen abhängig von einer oder mehreren Eigenschaften der Pixel in den jeweiligen Regionen variabel ist.

**11.** Verfahren nach Anspruch 9 oder 10, worin die einen oder mehreren statistischen Merkmal die Standardabweichung $\sigma_R$ der Werte der Pixel in den jeweiligen Regionen umfasst.

**12.** Verfahren nach Anspruch 11, worin die Anzahl der Bits, abhängig von vorgegebenen Bereichen der Standardabweichung $\sigma_R$ ausgewählt wird.

**13.** Verfahren nach Anspruch 9, worin eine Auswahl zwischen einem Wasserzeichenmarkierungsverfahren der Raumdomäne und einem Wasserzeichenmarkierungsverfahren der Frequenzdomäne gemacht wird.

**14.** Verfahren nach Anspruch 13, worin das Wasserzeichenmarkierungsverfahren der Raumdomäne das Wasserzeichenmarkierungsverfahren des niedrigsten signifikanten Bits (Least Significant Bit, LSB) ist.

**15.** Verfahren nach Anspruch 13, worin das Wasserzeichenmarkierungsverfahren in der Frequenz Domäne der diskreten Kosinus-Transformation (DCT) Wasserzeichenmarkierungsverfahren ist.

**16.** Verfahren nach Anspruch 13, worin die einen oder mehreren statistischen Merkmale die Standardabweichung $\sigma_R$ der Werte der Pixel in den jeweiligen Regionen umfasst, und worin das Wasserzeichenmarkierungsverfahren der Raumdomäne ausgewählt wird, wenn die Standardabweichung $\sigma_R$ geringer ist als ein vorgegebener Schwellenwert, und worin das Wasserzeichenmarkierungsverfahren der Frequenzdomäne anderenfalls ausgewählt wird.

**17.** Vorrichtung zur Wasserzeichenmarkierung eines Bildes, wobei die Vorrichtung umfasst:

- Mittel zum Segmentieren des Bildes in Regionen;
- Mittel zum Charakterisieren von jeder Region basierend auf einem oder mehreren statistischen Merkmalen der jeweiligen Regionen;
- Mittel zum Auswählen für jede der Regionen von einer vorgegebenen Anzahl von Wasserzeichenmarkierungsverfahren basierend auf der Charakterisierung der jeweiligen Region;
- Mittel zum Auswählen für jede der Regionen von einer Anzahl von Bits, die in die jeweiligen Region auf der Basis der Charakterisierung der Region eingebettet werden sollen, und
- Mittel zum Einbetten für jede der Regionen von der Anzahl von Bits von Daten in die jeweilige Region unter Verwendung des Wasserzeichenmarkierungsverfahrens, das für die Region ausgewählt wurde.

**18.** Verfahren zum Dekodieren eines Wasserzeichenmarkierten Bildes, wobei die Vorrichtung umfasst:

- Mittel zum Segmentieren des Wasserzeichenmarkierten Bildes in Regionen;
- Mittel zum Charakterisieren von jeder Region auf der Basis von einem oder mehreren statistischen Merkmalen der jeweiligen Regionen;
- Mittel zum Auswählen für jede der Regionen von einer aus einer vorgegebenen Anzahl von Wasserzeichenmarkierungsverfahren auf der Basis der Charakterisierung derjeweiligen Region;
- Mittel zum Auswählen für jede der Regionen von einer Anzahl von Bits, die aus der jeweiligen Region auf der Basis der Charakterisierung der Region extrahiert werden sollen, und
- Mittel zum Extrahieren für jede der Regionen von der Anzahl von Bits von Daten aus der jeweiligen Region unter Verwendung des Wasserzeichenmarkierungsverfahrens, das für die Region ausgewählt wurde.

**19.** Computerprogrammprodukt umfassend ein computerlesbares Medium, auf dem ein Computerprogram gespeichert ist, um das Verfahren nach einem der Ansprüche 1 bis 16 auszuführen.

## Revendications

**1.** Procédé d'établissement de filigrane d'une image, ledit procédé comprenant les étapes pour :

segmenter ladite image en régions (105) ;
caractériser chaque région sur la base d'une ou plusieurs caractéristiques statistiques des régions respectives (110) ;
pour chacune desdites régions, sélectionner l'un parmi un nombre prédéterminé de procédés d'établissement de filigrane sur la base de la caractérisation de la région respective (115) ;
pour chacune desdites régions, sélectionner un nombre de bits à intégrer dans la région respective sur la base de la caractérisation de la région (120) ; et
pour chacune desdites régions, intégrer ledit nombre de bits de données dans la région respective en utilisant le procédé d'établissement de filigrane sélectionné pour la région (125).

**2.** Procédé selon la revendication 1, dans lequel au moins l'une parmi la taille et la forme desdites régions est variable en fonction d'une ou plusieurs propriétés de pixels dans des régions respectives.

**3.** Procédé selon la revendication 1 ou 2, dans lequel ladite ou lesdites caractéristiques statistiques comprennent l'écart-type $\sigma_R$ des valeurs de pixels à l'intérieur des régions respectives.

**4.** Procédé selon la revendication 3, dans lequel ledit nombre de bits est sélectionné en fonction de plages prédéfinies dudit écart-type $\sigma_R$.

**5.** Procédé selon la revendication 1, dans lequel une sélection est effectuée entre un procédé d'établissement de filigrane dans un domaine spatial et un procédé d'établissement de filigrane dans un domaine de fréquence.

**6.** Procédé selon la revendication 5, dans lequel ledit procédé d'établissement de filigrane dans un domaine spatial est le procédé d'établissement de filigrane du bit le moins significatif (LSB).

**7.** Procédé selon la revendication 5, dans lequel ledit procédé d'établissement de filigrane dans le domaine de fréquence est le procédé d'établissement de filigrane à transformée cosinusoïdale discrète (DCT).

**8.** Procédé selon la revendication 5, dans lequel ladite ou lesdites caractéristiques statistiques comprennent l'écart-type $\sigma_R$ des valeurs de pixels à l'intérieur des régions respectives et dans lequel ledit procédé d'établissement de filigrane dans le domaine spatial est sélectionné lorsque ledit écart-type $\sigma_R$ est inférieur à un seuil prédéfini, et ledit procédé d'établissement de filigrane dans le domaine de fréquence est sélectionné autrement.

**9.** Procédé de décodage d'une image filigranée, ledit procédé comprenant les étapes pour :

segmenter ladite image filigranée en régions (180) ;
caractériser chaque région sur la base d'une ou plusieurs caractéristiques statistiques des régions respectives (165) ;

pour chacune desdites régions, sélectionner l'un parmi un nombre prédéterminé de procédés d'établissement de filigrane sur la base de la caractérisation de la région respective (170) ;

pour chacune desdites régions, sélectionner un nombre de bits à extraire de la région respective sur la base de la caractérisation de la région (175) ; et

pour chacune desdites régions, extraire ledit nombre de bits de données de la région respective en utilisant le procédé d'établissement de filigrane sélectionné pour la région (180).

10. Procédé selon la revendication 9, dans lequel au moins l'une parmi la taille et la forme desdites régions est variable en fonction d'une ou plusieurs propriétés de pixels dans les régions respectives.

11. Procédé selon la revendication 9 ou 10, dans lequel ladite ou lesdites caractéristiques statistiques comprennent l'écart-type $\sigma_R$ des valeurs de pixels à l'intérieur des régions respectives.

12. Procédé selon la revendication 11, dans lequel ledit nombre de bits est sélectionné en fonction de plages prédéfinies dudit écart-type $\sigma_R$.

13. Procédé selon la revendication 9, dans lequel une sélection est effectuée entre un procédé d'établissement de filigrane dans un domaine spatial et un procédé d'établissement de filigrane dans un domaine de fréquence.

14. Procédé selon la revendication 13, dans lequel ledit procédé d'établissement de filigrane dans le domaine spatial est le procédé d'établissement de filigrane du bit le moins significatif (LSB).

15. Procédé selon la revendication 13, dans lequel ledit procédé d'établissement de filigrane dans le domaine de fréquence est le procédé d'établissement de filigrane à transformée cosinusoïdale discrète (DCT).

16. Procédé selon la revendication 13, dans lequel ladite ou lesdites caractéristiques statistiques comprennent l'écart-type $\sigma_R$ des valeurs de pixels à l'intérieur des régions respectives et dans lequel ledit procédé d'établissement de filigrane dans le domaine spatial est sélectionné lorsque ledit écart-type $\sigma_R$ est inférieur à un seuil prédéfini, et ledit procédé d'établissement de filigrane dans le domaine de fréquence est sélectionné autrement.

17. Appareil d'établissement de filigrane d'une image, ledit appareil comprenant :

un moyen pour segmenter ladite image en régions ;

un moyen pour caractériser chaque région sur la base d'une ou plusieurs caractéristiques statistiques des régions respectives ;

un moyen pour sélectionner, pour chacune desdites régions, l'un parmi un nombre prédéterminé de procédés d'établissement de filigrane sur la base de la caractérisation de la région respective ;

un moyen pour sélectionner, pour chacune desdites régions, un nombre de bits à intégrer dans la région respective sur la base de la caractérisation de la région ; et

un moyen pour intégrer, pour chacune desdites régions, ledit nombre de bits de données dans la région respective en utilisant le procédé d'établissement de filigrane sélectionné pour la région.

18. Appareil de décodage d'une image filigranée, ledit appareil comprenant :

un moyen pour segmenter ladite image filigranée en régions ;

un moyen pour caractériser chaque région sur la base d'une ou plusieurs caractéristiques statistiques des régions respectives ;

un moyen pour sélectionner, pour chacune desdites régions, l'un parmi un nombre prédéterminé de procédés d'établissement de filigrane sur la base de la caractérisation de la région respective ;

un moyen pour sélectionner, pour chacune desdites régions, un nombre de bits à extraire de la région respective sur la base de la caractérisation de la région ; et

un moyen pour extraire, pour chacune desdites régions, ledit nombre de bits de données de la région respective en utilisant le procédé d'établissement de filigrane sélectionné pour la région.

19. Produit de programme informatique comprenant un support lisible par ordinateur sur lequel est enregistré un programme informatique pour mettre en oeuvre le procédé selon l'une quelconque des revendications 1 à 16.

100

Image _/ 101

↓

Segment image
into regions _/ 105

↓

Region
characterisation _/ 110

↓

Watermarking
method selection _/ 115

↓

Watermarking
capacity selection _/ 120

↓

Payload ⟶ Watermarking _/ 125

140

↓

Watermarked _/ 145
Image

**Fig. 1**

**150**  Watermarked ⌐ 145
Image

Segment image ⌐ 160
into regions

Region ⌐ 165
characterisation

Watermarking ⌐ 170
method selection

Watermarking ⌐ 175
capacity selection

Watermark ⌐ 180
extraction

Payload ⌐ 140

**Fig. 2**

215

Printer

**200**

214

Display

207

Video
Interface

208

I/O
Interface

209

Storage Device

201

204

Processor

I/O
Interface

Memory

205

213

206

Keyboard

202

203

**Fig. 3**

**Fig. 4A**

**Fig. 4B**

**REFERENCES CITED IN THE DESCRIPTION**

**Patent documents cited in the description**

- US 20020066019 A
- EP 1041805 A2